# EUROPÄISCHE PATENTSCHRIFT

(11) **EP 3 883 358 B1**
(45) Veröffentlichungstag und Bekanntmachung des Hinweises auf die Patenterteilung: **15.11.2023**
(21) Anmeldenummer: 19816503.7
(22) Anmeldetag: 20.11.2019
(51) Int. Cl.: A01B 59/04, A01B 59/06, B60D 1/62, B60D 1/64, B65D 90/00, B60D 1/00

(54) **KOPPLUNGSVORRICHTUNG, LANDWIRTSCHAFTLICHES NUTZFAHRZEUG UND VERFAHREN ZUR MECHANISCHEN KOPPLUNG UND MEDIENVERSORGUNG ZWISCHEN EINEM TRÄGERFAHRZEUG UND EINEM AUFBAU**
COUPLING DEVICE, AGRICULTURAL UTILITY VEHICLE AND METHOD FOR MECHANICAL COUPLING AND MEDIA SUPPLY BETWEEN A CARRIER VEHICLE AND A BODY
DISPOSITIF D'ACCOUPLEMENT, VÉHICULE UTILITAIRE AGRICOLE ET PROCÉDÉ D'ACCOUPLEMENT MÈCANIQUE ET D'ALIMENTATION EN FLUIDES ENTRE UN VÉHICULE PORTEUR ET UNE SUPERSTRUCTURE

(30) Priorität: 20.11.2018 DE 102018129181
(43) Veröffentlichungstag der Anmeldung: 29.09.2021
(73) Patentinhaber: AVL List GmbH, 8020 Graz (AT)
(72) Erfinder: WOOPEN, Thomas, 51570 Windeck (DE); HAMMES, Stephan, 40225 Düsseldorf (DE); MÜLLER, Frank Michael, 41844 Wegberg (DE)
(74) Vertreter: Mathys & Squire
(86) Internationale Anmeldenummer: PCT/AT2019/060393
(87) Internationale Veröffentlichungsnummer: WO 2020/102838

(56) Entgegenhaltungen:
- EP-A1- 0 434 472
- EP-A2- 2 225 925
- DE-A1-102015 226 093
- DE-U1- 9 013 888
- FR-A1- 2 687 115
- US-A- 4 368 899

## Beschreibung

Die vorliegende Erfindung betrifft eine Kopplungsvorrichtung, sowie ein landwirtschaftliches Nutzfahrzeug und ein Verfahren zur mechanischen Kopplung und Medienversorgung zwischen einem Trägerfahrzeug und einem Aufbau. Kopplungsvorrichtungen, sogenannte Twistlocks, zum Koppeln bzw. Verbinden von Containern oder Aufbauten auf Trägerfahrzeugen oder anderen Aufbauten sind beispielhaft aus der DE 38 22 034 A1 bekannt. Derartige Kopplungsvorrichtungen ermöglichen eine mechanische Kopplung zwischen dem Aufbau und dem Trägerfahrzeug. Dabei können Verriegelungsköpfe mit Riegelbolzen vorgesehen sein, welche in eine Verriegelungsstellung verdrehbar sind. US 4 368 899 offenbart eine weitere Kopplungsvorrichtung.

Insbesondere kann es bei landwirtschaftlichen Nutzfahrzeugen mit einem Trägerfahrzeug und einem Aufbau erforderlich sein, elektrische Leistung von dem Trägerfahrzeug zu dem Aufbau zu übertragen bzw. eine elektrische Leistungskopplung bereit zu stellen. Bei bekannten mechanischen Kopplungen zwischen dem Trägerfahrzeug und dem Aufbau ist keine Leistungsschnittstelle zur Herstellung einer elektrischen Leistungsversorgung vorhanden. Demnach muss eine separate Leistungskopplung zwischen dem Trägerfahrzeug und dem Aufbau bereitgestellt werden, welche einen gesonderten Bauraum bzw. eine separate Verbindung benötigt und zusätzlich zu der mechanischen Kopplung Kosten verursacht.

Es ist Aufgabe der vorliegenden Erfindung, die voranstehend beschriebenen Nachteile zumindest teilweise zu beheben. Insbesondere ist es Aufgabe der vorliegenden Erfindung, eine Kopplungsvorrichtung mit einer verbesserten und effizienten mechanischen Kopplung und einer gleichzeitigen Leistungsversorgung bereit zu stellen. Ferner ist es Aufgabe der vorliegenden Erfindung, ein landwirtschaftliches Nutzfahrzeug sowie ein Verfahren zur mechanischen Kopplung und Leistungsversorgung zwischen einem Trägerfahrzeug und einem Aufbau bereitzustellen.

Voranstehende Aufgabe wird gelöst durch eine Kopplungsvorrichtung mit den Merkmalen des Anspruchs 1, sowie durch ein landwirtschaftliches Nutzfahrzeug mit den Merkmalen des Anspruchs 10 und ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Kopplungsvorrichtung beschrieben sind, selbstverständlich auch im Zusammenhang mit dem erfindungsgemäßen landwirtschaftlichen Nutzfahrzeug und dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der vorliegenden Erfindung ist eine Kopplungsvorrichtung zur mechanischen Kopplung und Medienversorgung zwischen einem Trägerfahrzeug und einem Aufbau vorgesehen, aufweisend eine Kopplungsmechanik zur Herstellung einer mechanischen Kopplung zwischen dem Trägerfahrzeug und dem Aufbau und eine Medienmechanik zur Herstellung einer Medienversorgung zwischen dem Trägerfahrzeug und dem Aufbau, welche über einen Betätigungsmechanismus miteinander wirkverbunden sind. Die Kopplungsmechanik ist zwischen zumindest einer die mechanische Kopplung wenigstens teilweise ausbildenden ersten Kopplungsposition und einer die mechanische Kopplung freigebenden Freigabeposition bewegbar gelagert. Weiterhin ist die Medienmechanik zwischen einer die Medienversorgung ausbildenden Versorgungsposition und einer die Medienversorgung trennenden Trennposition bewegbar gelagert. Der Betätigungsmechanismus weist wenigstens ein Führungsmittel auf, für eine Zwangsführung der Medienmechanik aus der Trennposition in die Versorgungsposition bei einer Bewegung der Kopplungsmechanik aus der Freigabeposition in die erste Kopplungsposition.

Im Rahmen der Anmeldung kann die Kopplungsmechanik als mechanischer Koppler, beispielsweise als Twistlock ausgebildet sein. Die Kopplungsmechanik kann beispielhaft als Verriegelungsmechanismus mit einem Verriegelungsbolzen und einem zugehörigen Verriegelungskopf ausgebildet sein. Als mechanische Kopplung wird beispielsweise eine kraft- und/oder formschlüssige Verbindung zwischen dem Trägerfahrzeug und dem Aufbau bezeichnet, welche durch die Kopplungsmechanik bereitgestellt werden kann. Generell kann für die Kopplungsmechanik jede Art von mechanischer Kopplung verwendet werden.

Die Freigabeposition umfasst einen die mechanische Kopplung freigebenden Zustand des Trägerfahrzeuges und des Aufbaus. Mit anderen Worten sind das Trägerfahrzeug und der Aufbau in der Freigabeposition relativ zueinander bewegbar. In der Freigabeposition sind das Trägerfahrzeug und der Aufbau nicht miteinander mechanisch gekoppelt bzw. fixiert. Beispielsweise kann in der Freigabeposition die Kopplungsmechanik mit dem Trägerfahrzeug verbunden und kopplungsfrei in einer Aufnahme des Aufbaus angeordnet sein.

Die erste Kopplungsposition umfasst einen die mechanische Kopplung wenigstens teilweise ausbildenden Zustand des Trägerfahrzeuges und des Aufbaus. Mit anderen Worten sind das Trägerfahrzeug und der Aufbau in der ersten Kopplungsposition bereits mechanisch zueinander fixiert, aber noch nicht mit der maximal aufbringbaren Kraft fixiert. In der ersten Kopplungsposition kann die Kopplungsmechanik beispielsweise zumindest teilweise verriegelt in der Aufnahme des Aufbaus angeordnet sein, wodurch bereits eine mechanische Kopplung zwischen dem Trägerfahrzeug und dem Aufbau hergestellt ist. In der vollständigen Kopplungsposition ist die Kopplungsmechanik vorzugsweise vollständig verriegelt in der Aufnahme des Aufbaus angeordnet. In der vollständigen Kopplungsposition ist keine Relativbewegung zwischen dem Trägerfahrzeug und dem Aufbau möglich und das Trägerfahrzeug und der Aufbau sind im Wesentlichen mit der maximal aufbringbaren Kraft gegeneinander fixiert.

Im Rahmen der Anmeldung umfasst das Medium ein elektrisches, ein hydraulisches und/oder ein pneumatisches Medium. Die Medienversorgung bzw. die Leistungsversorgung kann daher elektrisch und/oder hydraulisch und/oder pneumatisch erfolgen. Die Medienmechanik kann beispielsweise als Leistungskoppler oder Multikuppler zur Bereitstellung der Medienversorgung ausgebildet sein. Vorteilhafterweise wird mittels der Medienversorgung sowohl eine elektrische als auch eine hydraulische Leistungsversorgung bereitgestellt.

Die Versorgungsposition umfasst einen die Medienversorgung ausbildenden Zustand des Trägerfahrzeuges und des Aufbaus. Mit anderen Worten findet in der Versorgungsposition eine Übertragung des Mediums bzw. eine Leistungsversorgung zwischen dem Trägerfahrzeug und dem Aufbau statt.

Die Trennposition umfasst einen die Medienversorgung trennenden Zustand des Trägerfahrzeuges und des Aufbaus. Mit anderen Worten findet in der Trennposition keine Übertragung des Mediums bzw. keine Leistungsversorgung zwischen dem Trägerfahrzeug und dem Aufbau statt.

Die Erfindung hat den Vorteil, dass die Kopplungsmechanik und die Medienmechanik über einen Betätigungsmechanismus miteinander wirkverbunden sind. Im Rahmen der Anmeldung wird über die Wirkverbundenheit eine Übertragung einer Bewegung und/oder einer Kraft bzw. eine Einleitung einer Funktion bezeichnet. Beispielsweise kann mittels des Betätigungsmechanismus eine Überführung von der Trennposition in die Versorgungsposition und gleichzeitig eine Überführung von der Freigabeposition in die Kopplungsposition und jeweils umgekehrt erfolgen. Daher kann eine kombinierte mechanische Kopplung und eine Medienversorgung innerhalb einer einzigen Kopplungsvorrichtung bereitgestellt werden. Es wird daher erfindungsgemäß eine Kopplungsvorrichtung bereitgestellt, welche es zum einen ermöglicht einen Aufbau mechanisch mit einem Trägerfahrzeug zu verbinden und zum anderen eine elektrische und hydraulische Leistungsversorgung zwischen dem Aufbau und dem Trägerfahrzeug ermöglicht. Folglich kann auf eine separate Leistungsversorgung in einem separaten Bauteil bzw. einer getrennten Verbindung verzichtet und daher Bauraum eingespart werden.

Die erfindungsgemäße Kopplungsvorrichtung kann vorteilhaft bei landwirtschaftlichen Nutzfahrzeugen angewendet werden. Beispielsweise eignet sich die erfindungsgemäße Kopplungsvorrichtung für Trägerfahrzeuge wie Traktoren und Aufbauten, wie beispielsweise selbstfahrende oder passive Anhänger, Aufhängungen oder Streukästen. Die erfindungsgemäße Kopplungsvorrichtung eignet sich generell für Trägerfahrzeuge mit einem Aufbau (vehicle implement), bei denen sowohl eine mechanische Kopplung als auch eine, insbesondere elektrische und hydraulische, Leistungsversorgung erforderlich ist.

In einer bevorzugten Ausführungsform ist vorgesehen, dass der Betätigungsmechanismus einen Verzögerungsabschnitt aufweist für eine Verzögerung des Beginns der Bewegung der Medienmechanik aus der Trennposition in die Versorgungsposition bis zum Erreichen der ersten Kopplungsposition der Kopplungsmechanik. Mit anderen Worten wird die Bewegung der Medienmechanik in die Versorgungsposition für eine Zeitspanne verzögert, bis das Trägerfahrzeug und der Aufbau in der ersten Kopplungsposition mechanisch fixiert sind. Es kann somit eine mechanische Erstfixierung oder Vorfixierung in der ersten Kopplungsposition stattfinden. Unmittelbar anschließend an die Erstfixierung bzw. unmittelbar anschließend an das Erreichen der ersten Kopplungsposition, kann die Einleitung der Medienversorgung und gleichzeitig die weitere Überführung der Kopplungsmechanik aus der ersten Kopplungsposition in eine vollständige Kopplungsposition erfolgen. Dies hat den Vorteil, dass in der ersten Kopplungsposition eine präzise und korrekte Positionierung zwischen dem Trägerfahrzeug und dem Aufbau aufgrund der Erstfixierung bereitgestellt werden kann, wodurch anschließend eine sichere und korrekte Überführung der Medienmechanik in die Versorgungsposition garantiert werden kann. Mit anderen Worten erfolgt die Medienversorgung, insbesondere die leistungstechnische Verbindung, unmittelbar nach einer erfolgten mechanischen Kopplung in der ersten Kopplungsposition. Es lassen sich somit unerwünschte Relativbewegungen zwischen dem Trägerfahrzeug und dem Aufbau vermeiden, welche eine korrekte Überführung der Medienmechanik in die Versorgungsposition behindern könnten. Vorzugsweise befinden sich das Trägerfahrzeug und der Aufbau gleichzeitig in der Versorgungsposition und in der vollständigen Kopplungsposition.

In einer weiteren Ausführungsform ist es denkbar, dass der Verzögerungsabschnitt eine Führungsgeometrie mit einer Leitkurve aufweist, wobei ein Führungselement der Medienmechanik innerhalb der Leitkurve bewegbar gelagert ist, wobei für die Verzögerung eine geradlinige Bewegung des Führungselementes und für die Bewegung der Medienmechanik in die Versorgungsposition eine Höhenverstellung des Führungselementes vorgesehen ist. Der Verzögerungsabschnitt bzw. die Führungsgeometrie kann beispielsweise als ebene Platte ausgebildet sein, wobei die Leitkurve als, insbesondere durchgängige, Ausnehmung oder Rille innerhalb der Platte angeordnet ist. Das Führungselement der Medienmechanik kann beispielhaft als Leitstab oder Führungsrolle ausgebildet sein, welcher in der Leitkurve bzw. der Ausnehmung beweglich gelagert ist. Aufgrund der Bewegung des Führungselementes kann die Medienmechanik in ihrer Position geführt werden. Insbesondere kann die Medienmechanik über die Bewegung des Führungsmittels entlang der Leitkurve höhenverstellt werden. Mittels der Höhenverstellung kann die Medienmechanik vorzugsweise von der Trennposition in die Versorgungsposition und umgekehrt überführt werden. Die Leitkurve weist für die Verzögerung beispielhaft einen horizontalen Leitabschnitt auf. Die Medienmechanik wird daher für eine Zeitspanne auf einer horizontalen Ebene bewegt, bevor eine Höhenverstellung der Medienmechanik erfolgt. Die Höhenverstellung der Medienmechanik kann vorteilhafterweise automatisch mittels wenigstens einem Stellmittel erfolgen. Aufgrund des Stellmittels kann eine Hubbewegung der Medienmechanik bzw. die Höhenverstellung realisiert werden. Die Verwendung der Leitkurve hat insbesondere den Vorteil, dass eine präzise und zeitgenaue Überführung der Medienmechanik in die Versorgungsposition oder die Trennposition erfolgen kann.

Bevorzugt kann vorgesehen sein, dass der Betätigungsmechanismus wenigstens ein Stellmittel, insbesondere einen Linearaktuator, für eine automatisierte Bewegung der Medienmechanik und/oder der Kopplungsmechanik aufweist. Das Stellmittel kann vorzugsweise als motorischer Antrieb ausgebildet sein. Weiterhin weist das Stellmittel eine Kraft- bzw. Wirkverbindung mit der Medienmechanik und/oder der Kopplungsmechanik auf. Alternativ kann der Betätigungsmechanismus auch manuell bedient werden.

Es ist weiterhin denkbar, dass das Führungsmittel einen Übersetzungsmechanismus zur Umwandlung einer transversalen Bewegung des Führungsmittels in eine rotatorische Bewegung der Kopplungsmechanik aufweist. Das Führungsmittel des Betätigungsmechanismus ist beispielhaft als ein Betätigungsgestänge ausgebildet, welches, insbesondere transversal, bewegbar gelagert ist. Das Betätigungsgestänge kann insbesondere automatisch oder manuell bewegt werden. Beispielsweise kann über die umgewandelte, rotatorische Bewegung der Kopplungsmechanik mittels eines Verriegelungsmechanismus eine Verriegelung der Kopplungsmechanik erfolgen. Mit anderen Worten kann durch eine transversale Bewegung des Betätigungsgestänges über den Übersetzungsmechanismus eine rotatorische Bewegung der Kopplungsmechanik zur Überführung in die erste bzw. in die vollständige Kopplungsposition erfolgen. Gleichermaßen kann die transversale Bewegung auch reversibel zur Entriegelung der Kopplungsmechanik bzw. zur Überführung in die Freigabeposition erfolgen.

In einer besonders bevorzugten Ausführungsform ist es denkbar, dass die Medienmechanik mehrere, insbesondere paarweise ausgeführte, Steckkontakte aufweist, wobei wenigstens ein Steckkontakt für eine hydraulische Kopplung und wenigstens ein Steckkontakt für eine elektrische Kopplung, insbesondere eine Hochvolt-Kopplung, an der Medienmechanik angeordnet sind und die Steckkontakte mit jeweils einem zugehörigen Gegensteckkontakt des Trägerfahrzeuges und/oder des Aufbaus in der Versorgungsposition kontaktierbar sind. Die Medienmechanik ist vorzugsweise zur Übertragung von hydraulischer, elektrischer oder pneumatischer Leistung ausgebildet. Insbesondere kann die elektrische Übertragung im Hochvoltbereich (mehr als 60 Volt) und/oder im Niedervoltbereich erfolgen. Die Medienmechanik bildet eine Art Schnittstelle zu einer Gegenschnittstelle des Trägerfahrzeuges und/oder des Aufbaus. Die Medienmechanik wird über das Führungselement bzw. die Führungsrolle entlang der Leitkurve beispielhaft an den Aufbau für die Versorgungsposition geführt. In der Versorgungsposition stehen die Steckkontakte der Medienmechanik in leistungsübertragenden Kontakt zu den Gegensteckkontakten des Aufbaus. Aufgrund der Steckkontakte im Hochvoltbereich kann neben der üblichen Leistungsversorgung auch eine größere elektrische Leistung übertragen werden. Sowohl die Steckkontakte im Hochvoltbereich als auch die Steckkontakte für die hydraulische Medienversorgung können dabei in beliebiger Anzahl, insbesondere paarweise, ausgeführt werden. Beispielsweise kann ein Steckkontakt im Niedervoltbereich vorgesehen sein, welcher sowohl der Niedervoltversorgung des Aufbaus als auch der BUS-Kommunikation zwischen dem Trägerfahrzeug und dem Aufbau dient.

Vorzugsweise ist vorgesehen, dass der Betätigungsmechanismus wenigstens eine Abdeckung für die Medienmechanik aufweist, welche beabstandet zu der Medienmechanik angeordnet ist und die Steckkontakte gegenüber dem Trägerfahrzeug und/oder dem Aufbau abdeckt, und über einen Hebelmechanismus mit dem Betätigungsmechanismus gekoppelt und bewegbar gelagert ist. Vorzugsweise ist die Medienmechanik, insbesondere die Steckkontakte der Medienmechanik, in der Trennposition im Wesentlichen vollständig von der Abdeckung bedeckt. Daher sind die Steckkontakte in der Trennposition mittels der Abdeckung geschützt gelagert. Die Abdeckung wird vorzugsweise während der Überführung von der Trennposition in die Versorgungsposition von der Medienmechanik, insbesondere automatisch, entfernt, sodass die Medienmechanik in die Versorgungsposition überführt werden kann. Die Abdeckung wird über die Bewegung des Hebelmechanismus entfernt, welcher mit dem bewegbaren Betätigungsmechanismus gekoppelt ist. Somit kann über die Betätigung bzw. die Bewegung des Betätigungsmechanismus, insbesondere des Betätigungsgestänges, die Abdeckung relativ zu der Medienmechanik bewegt bzw. verschoben werden.

Weiterhin kann bevorzugt vorgesehen sein, dass der Hebelmechanismus eine Übersetzungsmechanik aufweist, wodurch die Medienmechanik in der Trennposition im Wesentlichen vollständig von der Abdeckung abgedeckt ist und die Medienmechanik in der Versorgungsposition abdeckungsfrei ist. Die Übersetzungsmechanik des Hebelmechanismus ist vorzugsweis so ausgelegt, dass die Abdeckung im Wesentlichen vollständig von der Medienmechanik entfernt ist, wenn die Kopplungsmechanik in die erste Kopplungsposition bewegt ist. Dadurch wird sichergestellt, dass der Aufbau nicht mehr mit geringer Kraft vom Trägerfahrzeug gelöst werden kann, während die Medienversorgung mittels der Medienmechanik durchgeführt wird.

In einer weiteren Ausführungsform ist es denkbar, dass die Medienmechanik ein weiteres Führungselement zur kippfreien Bewegung der Medienmechanik aufweist. Beispielsweise kann das weitere Führungselement als weitere Führungsrolle oder als Ausnehmung innerhalb der Medienmechanik ausgebildet sein, in die ein korrespondierendes Gegenelement des Betätigungsmechanismus zur kippfreien Lagerung eingreifen kann. Insbesondere kann eine horizontale Ausrichtung der Medienmechanik gewährleistet werden. Eine Schräglage für die Kontaktierung der Steckkontakte mit den Gegensteckkontakten in der Versorgungsposition kann daher vermieden werden.

Gemäß einem zweiten Aspekt der Erfindung ist ein landwirtschaftliches Nutzfahrzeug umfassend ein Trägerfahrzeug, einen Aufbau und eine Kopplungsvorrichtung zur mechanischen Kopplung und Medienversorgung zwischen dem Trägerfahrzeug und dem Aufbau vorgesehen. Dabei ist die Kopplungsvorrichtung nach einer der vorhergehenden Ausführungsformen ausgebildet. Damit bringt ein erfindungsgemäßes landwirtschaftliches Nutzfahrzeug die gleichen Vorteile mit sich, wie sie ausführlich mit Bezug auf die erfindungsgemäße Kopplungsvorrichtung beschrieben worden sind.

Gemäß einem dritten Aspekt der Erfindung ist ein Verfahren zur mechanischen Kopplung und Medienversorgung zwischen einem Trägerfahrzeug und einem Aufbau mittels einer Kopplungsvorrichtung vorgesehen, welche insbesondere nach einer der vorhergehenden Ausführungsformen ausgebildet ist. Die Kopplungsvorrichtung weist eine Kopplungsmechanik zur Herstellung einer mechanischen Kopplung zwischen dem Trägerfahrzeug und dem Aufbau und eine Medienmechanik zur Herstellung einer Medienversorgung zwischen dem Trägerfahrzeug und dem Aufbau auf, welche über einen Betätigungsmechanismus miteinander wirkverbunden sind. Die Kopplungsmechanik ist zwischen zumindest einer die mechanische Kopplung wenigstens teilweise ausbildenden ersten Kopplungsposition und einer die mechanische Kopplung freigebenden Freigabeposition bewegbar gelagert. Weiterhin ist die Medienmechanik zwischen einer die Medienversorgung ausbildenden Versorgungsposition und einer die Medienversorgung trennenden Trennposition bewegbar gelagert. Eine Zwangsführung der Medienmechanik aus der Trennposition in die Versorgungsposition bei einer Bewegung der Kopplungsmechanik aus der Freigabeposition in die erste Kopplungsposition wird eingeleitet.

Als Ausgangslage wird beispielhaft der Zustand betrachtet, wenn das Trägerfahrzeug und der Aufbau korrekt zueinander positioniert sind, aber noch nicht mechanisch gekoppelt sind. Die Kopplungsmechanik des Trägerfahrzeuges ist vorteilhafterweise in einer Aufnahme des Aufbaus angeordnet. Die Medienmechanik ist beispielsweise zu diesem Zeitpunkt im Fahrzeuginneren mittels der Abdeckung geschützt gelagert.

Die Bewegung der Kopplungsmechanik aus der Freigabeposition in die erste Kopplungsposition wird vorzugsweise durch eine transversale Bewegung des Betätigungsgestänges des Betätigungsmechanismus ausgeführt. Dabei wird die transversale Bewegung mittels eines Übersetzungsmechanismus in eine rotatorische Bewegung zur Verriegelung der Kopplungsmechanik umgewandelt. Die Bewegung des Betätigungsmechanismus, insbesondere des Betätigungsgestänges, kann dabei manuell oder automatisiert, beispielsweise über Linearaktuatoren, erfolgen. Die Kopplungsmechanik wird in die erste Kopplungsposition bewegt. Wenn die erste Kopplungsposition erreicht wird, wird vorteilhafterweise die Zwangsführung der Medienmechanik in die Versorgungsposition eingeleitet. Dies hat den Vorteil, dass in der ersten Kopplungsposition eine präzise und korrekte Positionierung zwischen dem Trägerfahrzeug und dem Aufbau aufgrund der Erstfixierung bereitgestellt werden kann, wodurch eine sichere und korrekte Überführung der Medienmechanik in die Versorgungsposition garantiert werden kann. Mit anderen Worten erfolgt die Medienversorgung, insbesondere die leistungstechnische Verbindung, unmittelbar nach einer erfolgten mechanischen Kopplung in der ersten Kopplungsposition. Es lassen sich somit unerwünschte Relativbewegungen zwischen dem Trägerfahrzeug und dem Aufbau vermeiden, welche eine korrekte Überführung der Medienmechanik in die Versorgungsposition behindern könnten.

In einer besonders bevorzugten Ausführungsform erfolgt eine Verzögerung des Beginns der Bewegung der Medienmechanik aus der Trennposition in die Versorgungsposition bis zum Erreichen der ersten Kopplungsposition der Kopplungsmechanik. Hierzu weist der Betätigungsmechanismus eine Führungsgeometrie auf, welche über eine Leitkurve und ein innerhalb der Führungsgeometrie beweglich gelagertes Führungselement der Medienmechanik eine Höhenverstellung der Medienmechanik vornimmt. Die Medienmechanik wird während der Überführung der Kopplungsmechanik in die erste Kopplungsposition vorzugsweise noch nicht höhenverstellt. Hierzu verläuft die Leitgeometrie in einem Verzögerungsabschnitt beispielsweise zunächst im Wesentlichen geradlinig oder horizontal, so dass die Medienmechanik nicht mit der Abdeckung kollidiert.

Während das Betätigungsgestänge nach der ersten Kopplungsposition weiterhin transversal bewegt wird, wird die Kopplungsmechanik weiter verriegelt und in die vollständige Kopplungsposition überführt. Währenddessen erfolgt vorteilhafterweise aufgrund der Leitgeometrie eine erste, insbesondere transversale, Hubbewegung bzw. Höhenverstellung der Medienmechanik. Die Medienmechanik wird an den Aufbau herangeführt bzw. in die Versorgungsposition überführt.

Der Hebelmechanismus der Abdeckung kann dabei vorzugsweise außer Kraft gesetzt werden, so dass sich die Abdeckung nicht mehr bewegt, sobald die Position der Medienmechanik verändert wird.

Wenn das Betätigungsgestänge bis zu seiner Endposition bzw. der vollständigen Kopplungsposition gezogen ist, ist die Kopplungsmechanik vorzugsweise vollständig verriegelt, so dass zwischen Aufbau und Trägerfahrzeug keine Relativbewegungen mehr möglich sind.

Die Medienmechanik ist zu diesem Zeitpunkt vollständig in die Versorgungsposition bewegt, so dass die Steckkontakte der Medienmechanik mit den Gegensteckkontakten des Aufbaus verbunden sind. Dadurch kann elektrische und hydraulische Leistung von dem Trägerfahrzeug auf den Aufbau übertragen werden.

Vorzugsweise wird beim Erreichen der ersten Kopplungsposition der Kopplungsmechanik eine Abdeckung von der Medienmechanik entfernt. Die Abdeckung wird vorteilhafterweise über den Hebelmechanismus entfernt, welcher mit dem Betätigungsmechanismus gekoppelt ist. Die Übersetzung des Hebelmechanismus ist dabei insbesondere derart ausgelegt, dass die Abdeckung im Wesentlichen vollständig zur Seite geschoben ist, wenn die Kopplungsmechanik die erste Kopplungsposition erreicht. Dadurch wird sichergestellt, dass der Aufbau nicht mehr mit geringer Kraft gelöst werden kann, während der leistungstechnische Kopplungsvorgang durchgeführt wird.

In einer weiteren bevorzugten Ausführungsform wird die Zwangsführung der Medienmechanik aus der Trennposition in die Versorgungsposition und die Bewegung der Kopplungsmechanik aus der Freigabeposition in die erste bzw. die vollständige Kopplungsposition reversibel ausgeführt, wobei die Medienmechanik in die Trennposition und die Kopplungsmechanik in die Freigabeposition überführt werden. Somit kann beim Entkoppeln des Trägerfahrzeuges und des Aufbaus der gleiche Vorgang rückwärts durchgeführt werden. Mit anderen Worten wird die Medienmechanik im Wesentlichen vollständig in die Trennposition überführt, wenn die Kopplungsmechanik die erste Kopplungsposition erreicht. Während der Überführung der Kopplungsmechanik von der ersten Kopplungsposition in die Freigabeposition wird vorzugsweise die Abdeckung über die Medienmechanik verschoben.

Damit bringt ein erfindungsgemäßes Verfahren die gleichen Vorteile mit sich, wie sie ausführlich mit Bezug auf die erfindungsgemäße Vorrichtung beschrieben worden sind.

Die Erfindung wird nachfolgend anhand von nicht einschränkenden Ausführungsbeispielen näher erläutert, die in den Figuren dargestellt sind. Darin zeigen
- Fig. 1: eine perspektivische Ansicht einer erfindungsgemäßen Kopplungsvorrichtung nach einem ersten Ausführungsbeispiel;
- Fig. 2: eine perspektivische Ansicht einer Medienmechanik einer erfindungsgemäßen Kopplungsvorrichtung nach einem weiteren Ausführungsbeispiel;
- Fig. 3a-c: drei perspektivische Ansichten einer erfindungsgemäßen Kopplungsvorrichtung bei einem erfindungsgemäßen Verfahren nach einem dritten Ausführungsbeispiel;
- Fig. 4: eine schematische Seitenansicht eines erfindungsgemäßen landwirtschaftlichen Nutzfahrzeuges mit einer erfindungsgemäßen Kopplungsvorrichtung.

In den nachfolgenden Figuren sind aus Gründen der Übersichtlichkeit gleichartige Elemente mit gleichen Bezugszeichen gekennzeichnet.

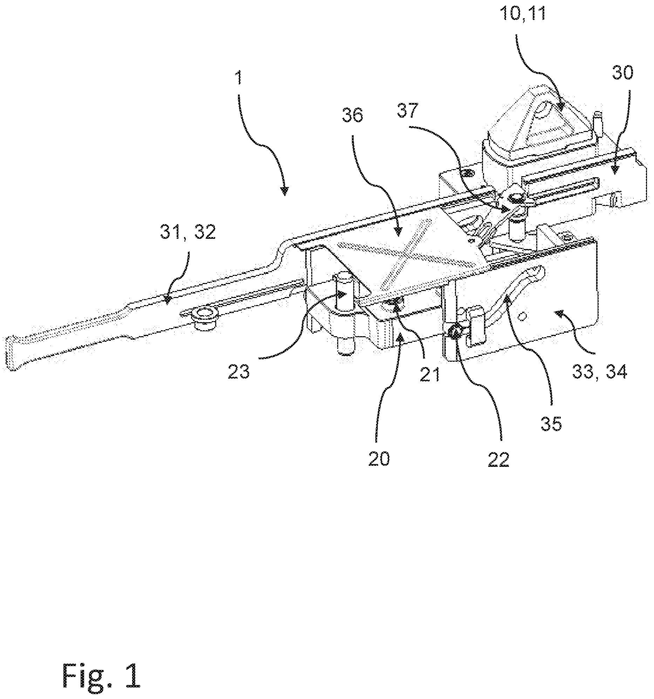

In Fig. 1 ist schematisch eine perspektivische Ansicht einer erfindungsgemäßen Kopplungsvorrichtung 1 nach einem ersten Ausführungsbeispiel gezeigt. Die Kopplungsvorrichtung 1 ist zur mechanischen Kopplung und Medienversorgung zwischen einem nicht dargestellten Trägerfahrzeug und einem nicht dargestellten Aufbau vorgesehen.

Die Kopplungsvorrichtung 1 weist eine Kopplungsmechanik 10 zur Herstellung einer mechanischen Kopplung zwischen dem Trägerfahrzeug und dem Aufbau auf. Die Kopplungsmechanik 10 ist beispielhaft als Twistlock 11 mit einem Verriegelungskopf und einem zugehörigen Verriegelungsmechanismus ausgebildet. Der Twistlock 11 ist drehbar zur Verriegelung bzw. Entriegelung gelagert. Insbesondere wird durch die Verdrehung bzw. Rotation des Twistlocks 11 eine formschlüssige Verbindung zwischen dem Trägerfahrzeug und dem Aufbau realisiert bzw. gelöst.

Die Kopplungsmechanik 10, insbesondere der Twistlock 11, ist zwischen zumindest einer die mechanische Kopplung wenigstens teilweise ausbildenden ersten Kopplungsposition und einer die mechanische Kopplung freigebenden Freigabeposition bewegbar gelagert. Die Kopplungsmechanik 10 ist beispielhaft in der Freigabeposition dargestellt. In der Freigabeposition ist der Twistlock 11 nicht verriegelt und das Trägerfahrzeug und der Aufbau sind relativ zueinander bewegbar. Die Kopplungsmechanik 10 bzw. der Twistlock 11 ist mit dem Trägerfahrzeug verbunden und kopplungsfrei in einer Aufnahme des Aufbaus angeordnet.

Die Kopplungsvorrichtung 1 weist weiterhin eine Medienmechanik 20 zur Herstellung einer Medienversorgung zwischen dem Trägerfahrzeug und dem Aufbau auf. Die Medienmechanik 20 ist zwischen einer die Medienversorgung ausbildenden Versorgungsposition und einer die Medienversorgung trennenden Trennposition bewegbar gelagert. Die Medienmechanik 20 weist mehrere, insbesondere paarweise ausgeführte, Steckkontakte 21 auf, wobei wenigstens ein Steckkontakt 21 für eine hydraulische Kopplung und wenigstens ein Steckkontakt 21 für eine elektrische Kopplung, insbesondere eine Hochvolt-Kopplung, an der Medienmechanik 20 angeordnet sind und die Steckkontakte 21 mit jeweils einem zugehörigen Gegensteckkontakt des Aufbaus in der Versorgungsposition kontaktierbar sind. Die Medienmechanik 20 ist vorzugsweise zur Übertragung von hydraulischer, elektrischer oder pneumatischer Leistung ausgebildet.

Die Kopplungsmechanik 10 und die Medienmechanik 20 sind über einen Betätigungsmechanismus 30 miteinander wirkverbunden. Der Betätigungsmechanismus 30 weist wenigstens ein Führungsmittel 31 auf. Das Führungsmittel 31 ist als Betätigungsgestänge 32 ausgebildet. Über den Betätigungsmechanismus 30 sind die Kopplungsmechanik 10 und die Medienmechanik 20 bewegbar gelagert. Hierzu wird das Betätigungsgestänge 32 manuell oder automatisch verschoben. Mittels des Betätigungsgestänges 32 kann eine Zwangsführung der Medienmechanik 20 aus der Trennposition in die Versorgungsposition bei einer Bewegung der Kopplungsmechanik 10 aus der Freigabeposition in die erste Kopplungsposition erfolgen.

Für die Bewegung der Kopplungsmechanik 10 aus der Freigabeposition in die erste Kopplungsposition wird das Betätigungsgestänge 32 des Betätigungsmechanismus 30 transversal bewegt. Hierzu weist das Betätigungsgestänge 32 einen Übersetzungsmechanismus zur Umwandlung der transversalen Bewegung in eine rotatorische Bewegung der Kopplungsmechanik 10 bzw. des Twistlocks 11 auf. Das Betätigungsgestänge 32 kann insbesondere automatisch oder manuell bewegt werden. Über die umgewandelte, rotatorische Bewegung der Kopplungsmechanik 10 kann eine Verriegelung des Twistlocks 11 erfolgen. Mit anderen Worten kann durch die transversale Bewegung des Betätigungsgestänges 32 über den Übersetzungsmechanismus eine rotatorische Bewegung der Kopplungsmechanik 10 zur Überführung in die erste bzw. in die vollständige Kopplungsposition erfolgen.

Für die Zwangsführung der Medienmechanik 20 aus der Trennposition in die Versorgungsposition weist der Betätigungsmechanismus 30 eine Führungsgeometrie 34 mit einer Leitkurve 35 auf. Die Führungsgeometrie 34 mit der Leitkurve 35 bildet einen Verzögerungsabschnitt 33 des Betätigungsmechanismus 30. Der Verzögerungsabschnitt 33 bzw. die Führungsgeometrie 34 ist als ebene Platte ausgebildet, wobei die Leitkurve 35 als durchgängige Ausnehmung oder Rille innerhalb der Platte angeordnet ist. Der Verzögerungsabschnitt 33 bewirkt eine Verzögerung des Beginns der Bewegung der Medienmechanik 20 aus der Trennposition in die Versorgungsposition bis zum Erreichen der ersten Kopplungsposition der Kopplungsmechanik. Mit anderen Worten wird die Bewegung der Medienmechanik 20 in die Versorgungsposition für eine Zeitspanne verzögert, bis das Trägerfahrzeug und der Aufbau in der ersten Kopplungsposition mechanisch fixiert sind.

Hierzu ist ein Führungselement 22 der Medienmechanik 20 innerhalb der Leitkurve 35 bewegbar gelagert. Das Führungselement 22 der Medienmechanik 20 ist als Führungsrolle ausgebildet, welche in der Leitkurve 35 bzw. der Ausnehmung beweglich gelagert ist. Aufgrund der Bewegung des Führungselementes 22 kann die Medienmechanik 20 mitgeführt werden.

Für die Verzögerung der Bewegung der Medienmechanik 20 in die Versorgungsposition ist eine geradlinige Bewegung des Führungselementes 22 vorgesehen und für die Bewegung der Medienmechanik 20 in die Versorgungsposition ist eine Höhenverstellung des Führungselementes 22 entlang der Leitkurve 35 vorgesehen. Mit anderen Worten weist die Leitkurve 35 einen horizontalen Leitabschnitt auf. Die Medienmechanik 20 wird daher zunächst für eine Zeitspanne auf einer horizontalen Ebene bewegt, bevor eine Höhenverstellung der Medienmechanik 20 entlang der Leitkurve 35 erfolgt. Die Verwendung der Leitkurve 35 hat insbesondere den Vorteil, dass eine präzise und zeitgenaue Überführung der Medienmechanik 20 in die Versorgungsposition oder die Trennposition erfolgen kann.

Der Betätigungsmechanismus 30 weist weiterhin eine Abdeckung 36 für die Medienmechanik 20 auf, welche beabstandet zu der Medienmechanik 20 angeordnet ist und die Steckkontakte 21 gegenüber dem Trägerfahrzeug und/oder dem Aufbau abdeckt. Die Abdeckung 36 ist über einen Hebelmechanismus 37 mit dem Betätigungsmechanismus 30 gekoppelt und bewegbar gelagert. Die Steckkontakte 21 der Medienmechanik sind beispielhaft vollständig von der Abdeckung 36 bedeckt und daher geschützt gelagert. Die Abdeckung 36 wird vorzugsweise während der Überführung in die erste Kopplungsposition von der Medienmechanik 20, insbesondere automatisch, entfernt. Aufgrund der Betätigung bzw. der Bewegung des Betätigungsmechanismus 30, insbesondere des Betätigungsgestänges 32, kann die Abdeckung 36 relativ zu der Medienmechanik 20 über den Hebelmechanismus 37 bewegt bzw. verschoben werden.

Die Medienmechanik 20 weist ein weiteres Führungselement 23 zur kippfreien Bewegung der Medienmechanik 20 auf. Das weitere Führungselement 23 ist als Ausnehmung innerhalb der Medienmechanik 20 ausgebildet, in die ein korrespondierendes Gegenelement des Betätigungsmechanismus 30 zur kippfreien Lagerung eingreifen kann. Insbesondere kann eine horizontale Ausrichtung der Medienmechanik 20 gewährleistet werden.

Mittels der Kopplungsvorrichtung 1 kann insgesamt eine kombinierte mechanische Kopplung und eine Medienversorgung innerhalb einer einzigen Vorrichtung bereitgestellt werden. Es wird daher erfindungsgemäß eine Kopplungsvorrichtung 1 bereitgestellt, welche es zum einen ermöglicht einen Aufbau mechanisch mit einem Trägerfahrzeug zu verbinden und zum anderen eine gleichzeitige elektrische und hydraulische Leistungsversorgung zwischen dem Aufbau und dem Trägerfahrzeug ermöglicht.

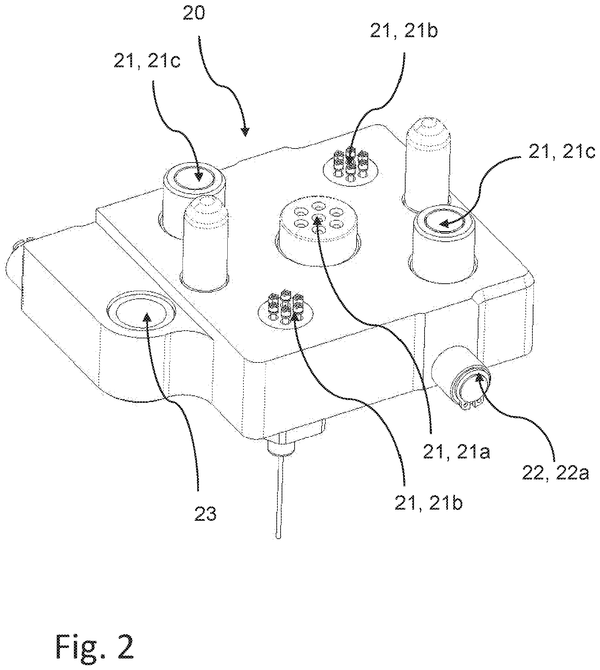

Fig. 2 zeigt eine perspektivische Ansicht einer Medienmechanik 20 einer erfindungsgemäßen Kopplungsvorrichtung 1 nach einem weiteren Ausführungsbeispiel. Die Medienmechanik 20 kann auch beispielhaft in der Kopplungsvorrichtung 1 gemäß Figur 1 angeordnet sein. Die Medienmechanik 20 bildet eine Art Schnittstelle zur Leistungsversorgung des Aufbaus.

Die Medienmechanik 20 weist mehrere Steckkontakte 21 auf, welche mit jeweils einem zugehörigen Gegensteckkontakt des Aufbaus in der Versorgungsposition kontaktierbar sind. Die Medienmechanik 20 ist plattenartig ausgebildet, wobei die Steckkontakte 21 jeweils in einer zugehörigen Ausnehmung angeordnet sind und zur Kontaktierung hervorstehen. Ein Steckkontakt 21 ist als Niedervoltkontakt 21a ausgebildet und zentral an der Medienmechanik 20 angeordnet. Der Niedervoltkontakt 21a kann sowohl der Niedervoltversorgung des Aufbaus als auch der BUS-Kommunikation zwischen dem Trägerfahrzeug und dem Aufbau dienen.

Um den Niedervoltkontakt 21a herum sind auf jeweils gegenüberliegenden Seiten zwei hydraulische Kontakte 21c und zwei Hochvoltkontakte 21b angeordnet. Die Hochvoltkontakte 21b ermöglichen eine Leistungsübertragung im Hochvoltbereich (mehr als 60 Volt), wodurch neben der üblichen Leistungsversorgung im Niedervoltbereich auch eine größere elektrische Leistung übertragen werden kann. Die Medienmechanik 20 ist folglich zur Übertragung von hydraulischer und elektrischer Leistung ausgebildet.

Die Medienmechanik wird über das Führungselement 22 bzw. die Führungsrolle 22a entlang der Leitkurve 35 der Führungsgeometrie 34 beispielhaft an den Aufbau für die Versorgungsposition geführt. In der Versorgungsposition stehen die Steckkontakte 21 der Medienmechanik 20 in leistungsübertragenden Kontakt zu den Gegensteckkontakten des Aufbaus. Sowohl die Steckkontakte 21b im Hochvoltbereich als auch die Steckkontakte 21c für die hydraulische Medienversorgung können dabei in beliebiger Anzahl, insbesondere paarweise, ausgeführt werden.

Die Medienmechanik 20 weist ein weiteres Führungselement 23 für die kippfreie Lagerung der Medienmechanik 20 auf. Das weitere Führungselement 23 ist dabei als Ausnehmung gebildet, in die ein zugehöriges Gegenelement des Betätigungsmechanismus 30 eingreifen kann.

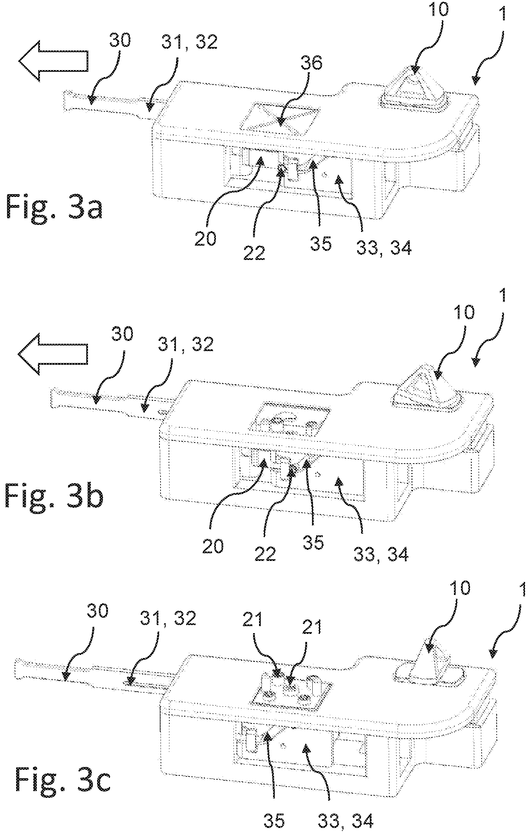

Die Figuren 3a-c zeigen drei perspektivische Ansichten einer erfindungsgemäßen Kopplungsvorrichtung 1 bei einem erfindungsgemäßen Verfahren nach einem dritten Ausführungsbeispiel. Die Kopplungsvorrichtung 1 ist dabei gemäß Figur 1 ausgebildet.

In Figur 3a ist die Kopplungsvorrichtung 1 in der Freigabeposition bzw. der Trennposition dargestellt. In Figur 3b ist die Kopplungsvorrichtung 1 in die erste Kopplungsposition überführt, wobei eine Zwangsführung der Medienmechanik in die Versorgungsposition eingeleitet wird. In Figur 3c ist die Kopplungsvorrichtung 1 in der vollständigen Kopplungsposition sowie in der Versorgungsposition gezeigt. Die Überführung der einzelnen Positionen wird nachstehend im Detail erläutert.

Als Ausgangslage wird beispielhaft in Figur 3a der Zustand betrachtet, wenn das Trägerfahrzeug und der Aufbau korrekt zueinander positioniert sind, aber noch nicht mechanisch gekoppelt sind. Die Kopplungsvorrichtung 1 bzw. das nicht dargestellte Trägerfahrzeug und der nicht dargestellte Aufbau sind in der Freigabeposition gezeigt. Die Kopplungsmechanik 10 ist mit dem Trägerfahrzeug verbunden und in einer Aufnahme des Aufbaus angeordnet. Die Medienmechanik 20 ist zu diesem Zeitpunkt im Fahrzeuginneren mittels der Abdeckung 36 geschützt gelagert. Das Führungselement 22 der Medienmechanik 20 ist am Beginn der Leitkurve 35 der Führungsgeometrie 34 angeordnet.

Die Bewegung der Kopplungsmechanik 10 aus der Freigabeposition in die erste Kopplungsposition gemäß Figur 3b wird durch eine transversale Bewegung des Betätigungsgestänges 32 des Betätigungsmechanismus 30 ausgeführt. Die transversale Bewegung des Betätigungsgestänges 32 erfolgt in Pfeilrichtung.

Dabei wird die transversale Bewegung mittels eines Übersetzungsmechanismus in eine rotatorische Bewegung zur Verriegelung der Kopplungsmechanik 10 umgewandelt. Die Bewegung des Betätigungsgestänges 32 kann dabei manuell oder automatisiert, beispielsweise über Linearaktuatoren, erfolgen. Die Kopplungsmechanik 10 wird folglich in die erste Kopplungsposition in Figur 3b bewegt. Die Bewegung in die erste Kopplungsposition entspricht beispielhaft einer Drehung der Kopplungsmechanik 10 im Uhrzeigersinn. In der ersten Kopplungsposition ist die Kopplungsmechanik 10 bereits vorverriegelt.

Während der Bewegung der Kopplungsmechanik 10 in die erste Kopplungsposition erfolgt eine Verzögerung des Beginns der Bewegung der Medienmechanik 20 aus der Trennposition in die Versorgungsposition bis zum Erreichen der ersten Kopplungsposition der Kopplungsmechanik 10. Die Medienmechanik 20 wird während der Überführung der Kopplungsmechanik 10 in die erste Kopplungsposition entlang des horizontalen Abschnitts der Leitkurve 35 bewegt, jedoch noch nicht höhenverstellt. Das Führungselement 22 wird entlang des horizontalen Abschnitts der Leitkurve 35 beispielhaft nach rechts geradlinig bewegt, jedoch nicht entlang der Leitkurve 35 höhenverstellt. Weiterhin wird die Abdeckung 36 von der Medienmechanik 20 entfernt.

Wenn die erste Kopplungsposition gemäß Figur 3b erreicht wird, wird die Zwangsführung der Medienmechanik 20 in die Versorgungsposition eingeleitet. Mit anderen Worten erfolgt die Medienversorgung, insbesondere die leistungstechnische Verbindung, unmittelbar nach einer erfolgten mechanischen Kopplung in der ersten Kopplungsposition. Es lassen sich somit unerwünschte Relativbewegungen zwischen dem Trägerfahrzeug und dem Aufbau vermeiden, welche eine korrekte Überführung der Medienmechanik in die Versorgungsposition behindern könnten.

Während das Betätigungsgestänge 32 nach der ersten Kopplungsposition weiterhin transversal in Pfeilrichtung bewegt wird, wird die Kopplungsmechanik 10 weiter verriegelt und in die vollständige Kopplungsposition gemäß Figur 3c überführt. Währenddessen erfolgt vorteilhafterweise aufgrund der Leitkurve 35 eine erste, insbesondere transversale, Hubbewegung bzw. Höhenverstellung der Medienmechanik 20. Die Medienmechanik 20 wird an den Aufbau herangeführt bzw. in die Versorgungsposition in Figur 3c überführt.

Wenn das Betätigungsgestänge 32 bis zu seiner Endposition bzw. der vollständigen Kopplungsposition gezogen ist, ist die Kopplungsmechanik 10 vorzugsweise vollständig verriegelt, so dass zwischen Aufbau und Trägerfahrzeug keine Relativbewegungen mehr möglich sind.

Die Medienmechanik 20 ist zu diesem Zeitpunkt vollständig in die Versorgungsposition bewegt, so dass die Steckkontakte 21 der Medienmechanik 20 mit den Gegensteckkontakten des Aufbaus verbunden werden können bzw. kontaktieren. Dadurch kann elektrische und hydraulische Leistung von dem Trägerfahrzeug auf den Aufbau übertragen werden.

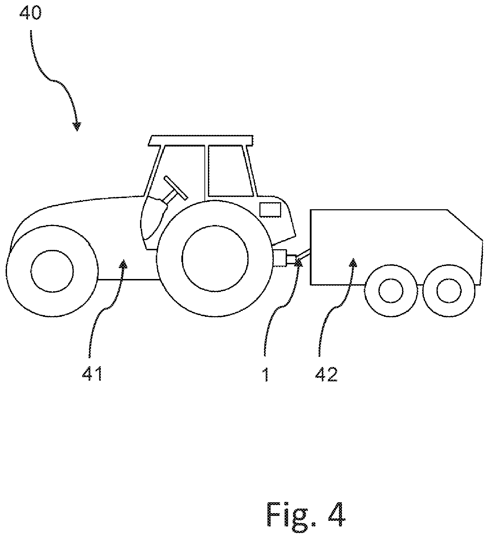

Fig. 4 zeigt eine schematische Seitenansicht eines erfindungsgemäßen landwirtschaftlichen Nutzfahrzeuges 40 mit einer erfindungsgemäßen Kopplungsvorrichtung 1. Das landwirtschaftliche Nutzfahrzeug 40 weist ein Trägerfahrzeug 41 und einen Aufbau 42 auf. Das Trägerfahrzeug 41 und der Aufbau sind mittels der Kopplungsvorrichtung 1 miteinander verbunden. Die Kopplungsvorrichtung 1 ist zur mechanischen Kopplung und Medienversorgung zwischen dem Trägerfahrzeug 41 und dem Aufbau 42 vorgesehen. Das Trägerfahrzeug 41 ist beispielhaft als Traktor ausgebildet. Der Aufbau 42 kann beispielhaft als selbstfahrender oder passive Anhänger, Aufhängung oder Streukasten ausgebildet sein. Die erfindungsgemäße Kopplungsvorrichtung 1 eignet sich generell für Trägerfahrzeuge 41 mit einem Aufbau 42, bei denen sowohl eine mechanische Kopplung als auch eine, insbesondere elektrische und hydraulische, Leistungsversorgung erforderlich ist.

### Bezugszeichenliste

- 1: Kopplungsvorrichtung
- 10: Kopplungsmechanik
- 11: Twistlock
- 20: Medienmechanik
- 21: Steckkontakt
- 21a: Niedervoltkontakt
- 21b: Hochvoltkontakt
- 21c: hydraulischer Kontakt
- 22: Führungselement
- 22a: Führungsrolle
- 23: weiteres Führungselement
- 30: Betätigungsmechanismus
- 31: Führungsmittel
- 32: Betätigungsgestänge
- 33: Verzögerungsabschnitt
- 34: Führungsgeometrie
- 35: Leitkurve
- 36: Abdeckung
- 37: Hebelmechanismus
- 40: landwirtschaftliches Nutzfahrzeug
- 41: Trägerfahrzeug
- 42: Aufbau

## Patentansprüche

1. Kopplungsvorrichtung (1) zur mechanischen Kopplung und Medienversorgung zwischen einem Trägerfahrzeug (41) und einem Aufbau (42), aufweisend eine Kopplungsmechanik (10) zur Herstellung einer mechanischen Kopplung zwischen dem Trägerfahrzeug (41) und dem Aufbau (42) und eine Medienmechanik (20) zur Herstellung einer Medienversorgung zwischen dem Trägerfahrzeug (41) und dem Aufbau (42), welche über einen Betätigungsmechanismus (30) miteinander wirkverbunden sind, wobei die Kopplungsmechanik (10) zwischen zumindest einer die mechanische Kopplung wenigstens teilweise ausbildenden ersten Kopplungsposition und einer die mechanische Kopplung freigebenden Freigabeposition bewegbar gelagert ist, wobei weiter die Medienmechanik (20) zwischen einer die Medienversorgung ausbildenden Versorgungsposition und einer die Medienversorgung trennenden Trennposition bewegbar gelagert ist,
**wobei**
der Betätigungsmechanismus (30) wenigstens ein Führungsmittel (31) aufweist für eine Zwangsführung der Medienmechanik (20) aus der Trennposition in die Versorgungsposition bei einer Bewegung der Kopplungsmechanik (10) aus der Freigabeposition in die erste Kopplungsposition,
**dadurch gekennzeichnet, dass**
die Kopplungsmechanik (10) neben der ersten Kopplungsposition eine vollständige Kopplungsposition aufweist,
wobei in der ersten Kopplungsposition bereits eine mechanische Kopplung zwischen dem Trägerfahrzeug und dem Aufbau hergestellt ist, und
wobei in der vollständigen Kopplungsposition keine Relativbewegung zwischen dem Trägerfahrzeug und dem Aufbau möglich ist.

2. Kopplungsvorrichtung (1) nach Anspruch 1,
**dadurch gekennzeichnet, dass**
der Betätigungsmechanismus (30) einen Verzögerungsabschnitt (33) aufweist für eine Verzögerung des Beginns der Bewegung der Medienmechanik (20) aus der Trennposition in die Versorgungsposition bis zum Erreichen der ersten Kopplungsposition der Kopplungsmechanik (10).

3. Kopplungsvorrichtung (1) nach Anspruch 2,
**dadurch gekennzeichnet, dass**
der Verzögerungsabschnitt (33) eine Führungsgeometrie (34) mit einer Leitkurve (35) aufweist, wobei ein Führungselement (22) der Medienmechanik (20) innerhalb der Leitkurve (35) bewegbar gelagert ist, wobei für die Verzögerung eine geradlinige Bewegung des Führungselementes (22) und für die Bewegung der Medienmechanik (20) in die Versorgungsposition eine Höhenverstellung des Führungselementes (22) vorgesehen ist.

4. Kopplungsvorrichtung (1) nach einem der vorhergehenden Ansprüche,
**dadurch gekennzeichnet, dass**
der Betätigungsmechanismus (30) wenigstens ein Stellmittel, insbesondere einen Linearaktuator, für eine automatisierte Bewegung der Medienmechanik (20) und/oder der Kopplungsmechanik (10) aufweist.

5. Kopplungsvorrichtung (1) nach einem der vorhergehenden Ansprüche,
**dadurch gekennzeichnet, dass**
das Führungsmittel (31) einen Übersetzungsmechanismus zur Umwandlung einer transversalen Bewegung des Führungsmittels (31) in eine rotatorische Bewegung der Kopplungsmechanik (10) aufweist.

6. Kopplungsvorrichtung (1) nach einem der vorhergehenden Ansprüche,
**dadurch gekennzeichnet, dass**
die Medienmechanik (20) mehrere, insbesondere paarweise ausgeführte, Steckkontakte (21) aufweist, wobei wenigstens ein Steckkontakt (21) für eine hydraulische Kopplung (21c) und wenigstens ein Steckkontakt (21) für eine elektrische Kopplung (21a, 21b), insbesondere eine Hochvolt-Kopplung, an der Medienmechanik (20) angeordnet sind und die Steckkontakte (21) mit jeweils einem zugehörigen Gegensteckkontakt des Trägerfahrzeuges (41) und/oder des Aufbaus (42) in der Versorgungsposition kontaktierbar sind.

7. Kopplungsvorrichtung (1) nach Anspruch 6,
**dadurch gekennzeichnet, dass**
der Betätigungsmechanismus (30) wenigstens eine Abdeckung (36) für die Medienmechanik (20) aufweist, welche beabstandet zu der Medienmechanik (20) angeordnet ist und die Steckkontakte (21) gegenüber dem Trägerfahrzeug (41) und/oder dem Aufbau (42) abdeckt, und über einen Hebelmechanismus (37) mit dem Betätigungsmechanismus (30) gekoppelt und bewegbar gelagert ist.

8. Kopplungsvorrichtung (1) nach Anspruch 7,
**dadurch gekennzeichnet, dass**
der Hebelmechanismus (37) eine Übersetzungsmechanik aufweist, wodurch die Medienmechanik (20) in der Trennposition im Wesentlichen vollständig von der Abdeckung (36) abgedeckt ist und die Medienmechanik (20) in der Versorgungsposition abdeckungsfrei ist.

9. Kopplungsvorrichtung (1) nach einem der vorhergehenden Ansprüche,
**dadurch gekennzeichnet, dass**
die Medienmechanik (20) ein weiteres Führungselement (23) zur kippfreien Bewegung der Medienmechanik (20) aufweist.

10. Landwirtschaftliches Nutzfahrzeug (40) umfassend ein Trägerfahrzeug (41), einen Aufbau (42) und eine Kopplungsvorrichtung (1) zur mechanischen Kopplung und Medienversorgung zwischen dem Trägerfahrzeug (41) und dem Aufbau (42),
**dadurch gekennzeichnet, dass**
die Kopplungsvorrichtung (1) nach einem der vorhergehenden Ansprüche ausgebildet ist.

11. Verfahren zur mechanischen Kopplung und Medienversorgung zwischen einem Trägerfahrzeug (41) und einem Aufbau (42) mit einer Kopplungsvorrichtung (1), insbesondere nach einem der Ansprüche 1 bis 9, welche eine Kopplungsmechanik (10) zur Herstellung einer mechanischen Kopplung zwischen dem Trägerfahrzeug (41) und dem Aufbau (42) und eine Medienmechanik (20) zur Herstellung einer Medienversorgung zwischen dem Trägerfahrzeug (41) und dem Aufbau (42) aufweist, welche über einen Betätigungsmechanismus (30) miteinander wirkverbunden sind, wobei die Kopplungsmechanik (10) zwischen zumindest einer die mechanische Kopplung wenigstens teilweise ausbildenden ersten Kopplungsposition und einer die mechanische Kopplung freigebenden Freigabeposition bewegbar gelagert ist, wobei weiter die Medienmechanik (20) zwischen einer die Medienversorgung ausbildenden Versorgungsposition und einer die Medienversorgung trennenden Trennposition bewegbar gelagert ist, **dadurch gekennzeichnet, dass** eine Zwangsführung der Medienmechanik (20) aus der Trennposition in die Versorgungsposition bei einer Bewegung der Kopplungsmechanik (10) aus der Freigabeposition in die erste Kopplungsposition eingeleitet wird,
wobei in der ersten Kopplungsposition bereits eine mechanische Kopplung zwischen dem Trägerfahrzeug und dem Aufbau hergestellt ist,
wobei nach Erreichen der ersten Kopplungsposition die Kopplungsmechanik (10) weiter verriegelt wird und in die vollständige Kopplungsposition überführt wird, so dass zwischen Aufbau und Trägerfahrzeug keine Relativbewegungen mehr möglich sind.

12. Verfahren nach Anspruch 11,
**dadurch gekennzeichnet, dass**
eine Verzögerung des Beginns der Bewegung der Medienmechanik (20) aus der Trennposition in die Versorgungsposition bis zum Erreichen der ersten Kopplungsposition der Kopplungsmechanik (10) erfolgt.

13. Verfahren nach einem der Ansprüche 11 oder 12,
**dadurch gekennzeichnet, dass**
beim Erreichen der ersten Kopplungsposition der Kopplungsmechanik (10) eine Abdeckung (36) von der Medienmechanik entfernt wird.

14. Verfahren nach einem der Ansprüche 11 bis 13,
**dadurch gekennzeichnet, dass**
die Zwangsführung der Medienmechanik (20) aus der Trennposition in die Versorgungsposition und die Bewegung der Kopplungsmechanik (10) aus der Freigabeposition in die erste Kopplungsposition reversibel ausgeführt wird, wobei die Medienmechanik (20) in die Trennposition und die Kopplungsmechanik (10) in die Freigabeposition überführt werden.

## Claims

1. Coupling device (1) for mechanical coupling and media supply between a base vehicle (41) and a superstructure (42), comprising coupling mechanics (10) for establishing a mechanical coupling between the base vehicle (41) and the superstructure (42) and media mechanics (20) for establishing a media supply between the base vehicle (41) and the superstructure (42), which are operatively interconnected via an actuation mechanism (30), wherein the coupling mechanics (10) are mounted so as to be movable between at least one first coupling position that at least partially forms the mechanical coupling and a release position that releases the mechanical coupling, wherein the media mechanics (20) are further mounted so as to be movable between a supply position that forms the media supply and a separating position that separates the media supply,
**wherein**
the actuation mechanism (30) comprises at least one guide means (31) for forcibly guiding the media mechanics (20) out of the separating position and into the supply position in the event of a movement of the coupling mechanics (10) out of the release position and into the first coupling position,
**characterised in that**
the coupling mechanics (10) have a full coupling position in addition to the first coupling position,
wherein a first mechanical coupling between the base vehicle and the superstructure is already established in the first coupling position, and
wherein no relative movement between the base vehicle and the superstructure is possible in the full coupling position.

2. Coupling device (1) according to claim 1,
**characterised in that**
the actuation mechanism (30) comprises a delay section (33) for delaying the start of the movement of the media mechanics (20) out of the separating position and into the supply position until the first coupling position of the coupling mechanics (10) is reached.

3. Coupling device (1) according to claim 2,
**characterised in that**
the delay section (33) has a guide geometry (34) with a directrix (35), wherein a guide element (22) of the media mechanics (20) is mounted so as to be movable within the directrix (35), wherein a straight-line movement of the guide element (22) is provided for the delay and height adjustment of the guide element (22) is provided for the movement of the media mechanics (20) into the supply position.

4. Coupling device (1) according to any of the preceding claims,
**characterised in that**
the actuation mechanism (30) comprises at least one actuating means, in particular a linear actuator, for automated movement of the media mechanics (20) and/or coupling mechanics (10).

5. Coupling device (1) according to any of the preceding claims,
**characterised in that**
the guide means (31) comprises a transmission mechanism for converting a transverse movement of the guide means (31) into a rotational movement of the coupling mechanics (10).

6. Coupling device (1) according to any of the preceding claims,
**characterised in that**
the media mechanics (20) comprise multiple, in particular pairwise, plug-in contacts (21), wherein at least one plug-in contact (21) for a hydraulic coupling (21c) and at least one plug-in contact (21) for an electrical coupling (21a, 21b), in particular a high-voltage coupling, are arranged at the media mechanics (20) and the plug-in contacts (21) can each be contacted with an associated mating contact of the base vehicle (41) and/or superstructure (42) in the supply position.

7. Coupling device (1) according to claim 6,
**characterised in that**
the actuation mechanism (30) comprises at least one cover (36) for the media mechanics (20) that is arranged at a distance from the media mechanics (20) and covers the plug-in contacts (21) with respect to the base vehicle (41) and/or superstructure (42), and is coupled to the actuation mechanism (30) and movably mounted via a lever mechanism (37).

8. Coupling device (1) according to claim 7,
**characterised in that**
the lever mechanism (37) comprises transmission mechanics, as a result of which the media mechanics (20) are covered substantially completely by the cover (36) in the separating position and the media mechanics (20) are uncovered in the supply position.

9. Coupling device (1) according to any of the preceding claims,
**characterised in that**
the media mechanics (20) comprise a further guide element (23) for the tilt-free movement of the media mechanics (20).

10. Agricultural utility vehicle (40) comprising a base vehicle (41), a superstructure (42) and a coupling device (1) for mechanical coupling and media supply between the base vehicle (41) and the superstructure (42),
**characterised in that**
the coupling device (1) is designed according to any of the preceding claims.

11. Method for mechanical coupling and media supply between a base vehicle (41) and a superstructure (42) using a coupling device (1), in particular according to any of claims 1 to 9, which comprises coupling mechanics (10) for establishing a mechanical coupling between the base vehicle (41) and the superstructure (42) and media mechanics (20) for establishing a media supply between the base vehicle (41) and the superstructure (42), which are operatively interconnected via an actuation mechanism (30), wherein the coupling mechanics (10) are mounted so as to be movable between at least one first coupling position that at least partially forms the mechanical coupling and a release position that releases the mechanical coupling, wherein the media mechanics (20) are further mounted so as to be movable between a supply position that forms the media supply and a separating position that separates the media supply, **characterised in that** forcible guidance of the media mechanics (20) out of the separating position and into the supply position is initiated in the event of a movement of the coupling mechanics (10) out of the release position and into the first coupling position,
wherein a mechanical coupling between the base vehicle and the superstructure is already established in the first coupling position,
wherein, once the first coupling position has been reached, the coupling mechanics (10) are further locked and transferred into the full coupling position, such that relative movements between the superstructure and base vehicle are no longer possible.

12. Method according to claim 11,
**characterised in that**
a delay of the start of the movement of the media mechanics (20) out of the separating position and into the supply position takes place until the first coupling position of the coupling mechanics (10) is reached.

13. Method according to any of claims 11 or 12,
**characterised in that**
a cover (36) is removed from the media mechanics when the first coupling position of the coupling mechanics (10) is reached.

14. Method according to any of claims 11 to 13,
**characterised in that**
the forcible guidance of the media mechanics (20) out of the separating position and into the supply position and the movement of the coupling mechanics (10) out of the release position and into the first coupling position are reversible, wherein the media mechanics (20) are transferred into the separating position and the coupling mechanics (10) are transferred into the release position.

## Revendications

1. Dispositif d'accouplement (1) pour l'accouplement mécanique et l'alimentation en fluide entre un véhicule porteur (41) et une structure (42), présentant un mécanisme d'accouplement (10) pour la réalisation d'un accouplement mécanique entre le véhicule porteur (41) et la structure (42) et un mécanisme de fluide (20) pour la réalisation d'une alimentation en fluide entre le véhicule porteur (41) et la structure (42), qui sont reliés activement entre eux par un mécanisme d'actionnement (30), le mécanisme d'accouplement (10) étant monté mobile entre au moins une première position d'accouplement formant au moins partiellement l'accouplement mécanique et une position de libération libérant l'accouplement mécanique, le mécanisme de fluide (20) étant en outre monté mobile entre une position d'alimentation formant l'alimentation en fluide et une position de séparation séparant l'alimentation en fluide,
**dans lequel,**
le mécanisme d'actionnement (30) présente au moins un moyen de guidage (31) pour un guidage forcé du mécanisme de fluide (20) de la position de séparation à la position d'alimentation lors d'un mouvement du mécanisme d'accouplement (10) de la position de libération à la première position d'accouplement,
**caractérisé en ce que**
le mécanisme d'accouplement (10) présente une position d'accouplement complète en plus de la première position d'accouplement,
dans la première position d'accouplement, un accouplement mécanique entre le véhicule porteur et la carrosserie étant déjà établi, et
dans la position d'accouplement complète, aucun mouvement relatif n'est possible entre le véhicule porteur et la carrosserie.

2. Dispositif d'accouplement (1) selon la revendication 1,
**caractérisé en ce que**
le mécanisme d'actionnement (30) comprend une section de décélération (33) pour retarder le début du mouvement du mécanisme de fluide (20) de la position de séparation à la position d'alimentation jusqu'à ce que la première position d'accouplement du mécanisme d'accouplement (10) soit atteinte.

3. Dispositif d'accouplement (1) selon la revendication 2,
**caractérisé en ce que**
la section de décélération (33) présente une géométrie de guidage (34) avec une courbe directrice (35), un élément de guidage (22) du mécanisme à fluide (20) étant monté mobile à l'intérieur de la courbe directrice (35), un mouvement rectiligne de l'élément de guidage (22) étant prévu pour la décélération et un réglage en hauteur de l'élément de guidage (22) étant prévu pour le mouvement du mécanisme à fluide (20) dans la position d'alimentation.

4. Dispositif d'accouplement (1) selon l'une quelconque des revendications précédentes,
**caractérisé en ce que**
le mécanisme d'actionnement (30) comprend au moins un moyen de réglage, en particulier un actionneur linéaire, pour un mouvement automatisé du mécanisme de fluide (20) et/ou du mécanisme d'accouplement (10).

5. Dispositif d'accouplement (1) selon l'une quelconque des revendications précédentes,
**caractérisé en ce que**
le moyen de guidage (31) comprend un mécanisme de traduction pour convertir un mouvement transversal du moyen de guidage (31) en un mouvement de rotation du mécanisme d'accouplement (10).

6. Dispositif d'accouplement (1) selon l'une quelconque des revendications précédentes,
**caractérisé en ce que**
le mécanisme de fluide (20) présente plusieurs contacts enfichables (21), en particulier réalisés par paires, au moins un contact enfichable (21) pour un couplage hydraulique (21c) et au moins un contact enfichable (21) pour un couplage électrique (21a, 21b), en particulier un couplage haute tension, étant disposés sur le mécanisme de fluide (20) et les contacts enfichables (21) pouvant être mis en contact avec respectivement un contact enfichable opposé associé du véhicule porteur (41) et/ou de la structure (42) dans la position d'alimentation.

7. Dispositif d'accouplement (1) selon la revendication 6,
**caractérisé en ce que**
le mécanisme d'actionnement (30) comporte au moins un couvercle (36) pour le mécanisme de fluide (20), qui est disposé à distance du mécanisme de fluide (20) et recouvre les contacts enfichables (21) par rapport au véhicule porteur (41) et/ou à la structure (42), et est couplé et monté mobile avec le mécanisme d'actionnement (30) par l'intermédiaire d'un mécanisme à levier (37).

8. Dispositif d'accouplement (1) selon la revendication 7,
**caractérisé en ce que**
le mécanisme à levier (37) comprend un mécanisme de démultiplication, grâce auquel le mécanisme de fluide (20) est sensiblement entièrement recouvert par le couvercle (36) dans la position de séparation et le mécanisme de fluide (20) est exempt de couverture dans la position d'alimentation.

9. Dispositif d'accouplement (1) selon l'une quelconque des revendications précédentes,
**caractérisé en ce que**
le mécanisme de fluide (20) présente un autre élément de guidage (23) pour le mouvement sans basculement du mécanisme de fluide (20).

10. Véhicule agricole utilitaire (40) comprenant un véhicule porteur (41), une structure (42) et un dispositif d'accouplement (1) pour l'accouplement mécanique et l'alimentation en fluide entre le véhicule porteur (41) et la structure (42),
**caractérisé en ce que**
le dispositif d'accouplement (1) est réalisé selon l'une quelconque des revendications précédentes.

11. Procédé d'accouplement mécanique et d'alimentation en fluide entre un véhicule porteur (41) et une structure (42) avec un dispositif d'accouplement (1), en particulier selon l'une quelconque des revendications 1 à 9, qui présente un mécanisme d'accouplement (10) pour la réalisation d'un accouplement mécanique entre le véhicule porteur (41) et la structure (42) et un mécanisme de fluide (20) pour la réalisation d'une alimentation en fluide entre le véhicule porteur (41) et la structure (42), qui sont reliés activement entre eux par un mécanisme d'actionnement (30), le mécanisme d'accouplement (10) étant monté mobile entre au moins une première position de couplage formant au moins partiellement le couplage mécanique et une position de libération libérant le couplage mécanique, le mécanisme de fluide (20) étant en outre monté mobile entre une position d'alimentation formant l'alimentation en fluide et une position de séparation séparant l'alimentation en fluide, **caractérisé en ce qu'**un guidage forcé du mécanisme de fluide (20) de la position de séparation à la position d'alimentation est initié lors d'un mouvement du mécanisme d'accouplement (10) de la position de libération à la première position d'accouplement,
un couplage mécanique entre le véhicule porteur et la carrosserie étant déjà établi dans la première position de couplage,
dans lequel, une fois la première position d'accouplement atteinte, le mécanisme d'accouplement (10) est verrouillé davantage et est transféré dans la position d'accouplement complète, de sorte qu'aucun mouvement relatif n'est plus possible entre la structure et le véhicule porteur.

12. Procédé selon la revendication 11,
**caractérisé en ce qu'un**
retard est appliqué au début du mouvement du mécanisme de fluide (20) de la position de séparation à la position d'alimentation jusqu'à ce que la première position d'accouplement du mécanisme d'accouplement (10) soit atteinte.

13. Procédé selon l'une des revendications 11 ou 12,
**caractérisé en ce que**
lorsque la première position d'accouplement du mécanisme d'accouplement (10) est atteinte, un couvercle (36) est retiré du mécanisme de support.

14. Procédé selon l'une quelconque des revendications 11 à 13,
**caractérisé en ce que**
le guidage forcé du mécanisme de fluide (20) de la position de séparation à la position d'alimentation et le déplacement du mécanisme d'accouplement (10) de la position de libération à la première position d'accouplement sont réalisés de manière réversible, le mécanisme de fluide (20) étant transféré à la position de séparation et le mécanisme d'accouplement (10) à la position de libération.
